# EUROPÄISCHE PATENTSCHRIFT

(11) **EP 0 678 487 B1**
(45) Veröffentlichungstag und Bekanntmachung des Hinweises auf die Patenterteilung: **03.06.1998**
(21) Anmeldenummer: 95105419.6
(22) Anmeldetag: 11.04.1995
(51) Int. Cl.: C04B 7/47, F27B 7/38

(54) **Verfahren und Anlage zur Kühlung von Weisszementklinker**
Process and apparatus for cooling white cement clinker
Procédé et dispositif de refroidissement du clinker de ciment blanc

(30) Priorität: 23.04.1994 DE 4414292
(43) Veröffentlichungstag der Anmeldung: 25.10.1995
(73) Patentinhaber: Krupp Fördertechnik GmbH, 45143 Essen (DE)
(72) Erfinder: Bomba, Gerhard, Dipl.-Ing., D-38108 Braunschweig (DE); Grothaus, Franz Josef, Dipl.-Ing., D-59320 Ennigerloh (DE); Zakel, Gerhard, D-48231 Warendorf (DE); Koeberer, Günther, Dipl.-Ing., D-22119 Hamburg (DE); Steffen, Egbert, Dipl.-Ing., D-21039 Hamburg (DE)

(56) Entgegenhaltungen:
- DE-A- 2 361 060
- DE-B- 1 058 921
- DE-C- 3 521 586
- DE-C- 3 521 587
- GB-A- 742 559
- GB-A- 2 167 740
- US-A- 3 425 853
- US-A- 4 101 337

## Beschreibung

Die Erfindung betrifft ein Verfahren zur Kühlung von in einem Drehrohrofen gesintertem Weißzementklinker, bei dem in einer ersten Kühlstufe eine Abschreckung des aus dem Drehrohrofen austretenden Weißzementklinkers mittels eines Kühlmittels, beispielsweise Wasser, in einer möglichst sauerstoffarmen Umgebung erfolgt, wobei im Bereich der ersten Kühlstufe eine Zerkleinerungsvorrichtung vorgesehen ist, und bei dem in einer letzten Kühlstufe der Weißzementklinker mittels Luft weiter abgekühlt und diese Luft als Verbrennungsluft in den Drehrohrofen zurückgeführt wird. Die Erfindung betrifft ferner eine Anlage zur Durchführung des Verfahrens.

Bei bekannten Verfahren der vorgenannten Art wird der aus dem Drehrohrofen austretende Weißzementklinker in der ersten Kühlstufe in zwei Fraktionen klassiert und sodann die Grobfraktion in der Zerkleinerungsvorrichtung zerkleinert und schließlich beide Fraktionen der letzten Kühlstufe zur Nachkühlung zugeführt (DE-C-35 21 586, DE-C-35 21 587).

Bei einem bekannten Verfahren zur Herstellung von hochweißem Zementklinker, erfolgt die Kühlung des Zementklinkers in einem durch drei Mischschnecken gebildeten Kühler (US-A-3 425 853). Die drei Mischschnecken bilden dabei nur eine einzige Kühlstufe.

Zwei Kühlstufen, sind bei einer bekannten Vorrichtung zur Erzeugung von weichgebranntem Kalk aus Kalkstein oder Dolomit vorgesehen (DE-B-10 58 921). Hierbei gelangt der im Drehrohrofen weichgebrannte Kalk zunächst in einen Schacht. In diesem Schacht erfolgt aber keine Kühlung, sondern eine Nachentsäuerung. Erst danach wird der weichgebrannte Kalk durch die beiden Kühlstufen geführt.

Bei einer weiteren bekannten Vorrichtung, die zur Herstellung von weißem Zementklinker dient, sind ebenfalls zwei Kühlstufen vorgesehen (GB-A-2 167 740).

Der Erfindung liegt die Aufgabe zugrunde, das Ergebnis der Kühlung von in einem Drehrohrofen gesintertem Weißzementklinker dahingehend zu verbessern, daß beim Eintritt in die letzte Kühlstufe zwischen den einzelnen Zementklinkerteilchen keine oder nur geringfügige Temperaturdifferenzen bestehen, wobei die Zementklinkerteilchen eine solche Temperatur aufweisen sollen, daß einerseits in der letzten Kühlstufe keine Verfärbung des Klinkers mehr auftreten kann und andererseits noch eine möglichst große Wärmemenge enthalten, die in der letzten Kühlstufe rekuperiert werden kann.

Diese Aufgabe wird durch das erfindungsgemäße Verfahren in der Weise gelöst,
- daß die Kühlung in der ersten Kühlstufe in möglichst sauerstoffarmer Umgebung bei kurzer Verweilzeit durchgeführt und der Weißzementklinker dabei auf eine mittlere Temperatur von etwa 650°C bis 750°C abgeschreckt wird,
- daß der Weißzementklinker sodann in eine zweite Kühlstufe gelangt, in der er - ebenfalls in möglichst sauerstoffarmer Umgebung - durch eine Misch- und Transportstrecke geleitet wird und dabei bei einer Verweilzeit von mindestens 15 Sekunden die einzelnen Klinkerteilchen homogen vermischt werden, wobei ein Temperaturausgleich zwischen den einzelnen Klinkerteilchen und eine weitere Abkühlung des Weißzementklinkers auf eine Temperatur von etwa 550°C bis 650°C erfolgt,
- und daß danach der Weißzementklinker der letzten Kühlstufe zugeführt wird.

Beim Verlassen der ersten Kühlstufe liegt die Temperatur der größeren Klinkerfraktion, insbesondere im Inneren, über der vorgenannten mittleren Temperatur, während die Temperatur der kleineren Fraktion darunterliegt. Bei dem aus der zweiten Kühlstufe austretenden Weißzementklinker haben sich die Temperaturen der einzelnen Klinkerteilchen weitgehend angeglichen.

Die nach dem erfindungsgemäßen Verfahren abgekühlten Klinkerteilchen weisen sämtlich vor dem Eintritt in die letzte Kühlstufe eine solche Temperatur auf, bei der Sauerstoff auf die Farbe des Weißzementklinkers keinen oder nur einen geringen Einfluß hat.

Durch das erfindungsgemäße Verfahren - in erster Linie durch den Wärmeaustausch zwischen zu heißen und zu kalten Klinkerteilchen in der zweiten Kühlstufe - wird die Qualität des Weißzementklinkers bei optimaler Wärmenutzung wesentlich erhöht, weil durch das Verfahren vermieden wird, daß wegen der verhältnismäßig kurzen Verweilzeit des Weißzementklinkers in der ersten Kühlstufe eine ungleichmäßige Temperaturverteilung bei den einzelnen Teilchen des Weißzementklinkers auftritt, die bei den heißeren Teilchen zur Oxidation des Eisens führt, während bei den kühleren Teilchen keine ausreichende Wärmenutzung erreicht wird.

In Ausgestaltung der Erfindung wird der gesamte Klinkerstrom nach dem Austritt aus dem Drehrohrofen durch die Zerkleinerungsvorrichtung geleitet. Dadurch erübrigt sich eine Klassiereinrichtung und die erfindungsgemäße Anlage benötigt eine geringere Bauhöhe. Durch das Fehlen einer Klassiereinrichtung werden auch die damit verbundenen Nachteile vermieden. Diese Nachteile bestehen darin, daß die im heißen Bereich durchgeführte Klassierung des Weißzementklinkers im Falle eines bewegten Siebes oder Rostes einen hohen Aufwand erfordert, während ein starrer Rost zu Verstopfungen neigt, die zu erheblichen Störungen führen können.

Der Weißzementklinker wird sowohl vor seinem Eintritt in die Zerkleinerungsvorrichtung als auch bei seinem Austritt daraus mit einem Kühlmittel besprüht, so daß der Zerkleinerungsbereich einen Teil der ersten Kühlstufe darstellt.

Eine optimale Regelung des Zutritts von Kühlmittel durch die in der ersten Kühlstufe vorgesehenen Düsen wird dadurch erzielt, daß in der ersten Kühlstufe eine Messung der Temperatur des Weißzementklinkers durchgeführt wird und solange ein kontrolliertes Besprühen des Weißzementklinkers mit einem Kühlmittel erfolgt, bis die gewünschte Austrittstemperatur der ersten Kühlstufe erreicht ist.

Die Verweilzeit des Weißzementklinkers in der Misch- und Transportstrecke beträgt vorteilhafterweise etwa 30 bis 120 Sekunden. Während dieses Zeitraums findet infolge des Mischvorgangs der gewünschte Temperaturausgleich statt.

Nach einem weiteren Merkmal der Erfindung erfolgt die Abkühlung des Weißzementklinkers im Bereich der Misch- und Transportstrecke durch Ausdampfen. Dadurch ist der Weißzementklinker bei seinem Eintritt in die letzte Kühlstufe weitgehend trocken.

Nach einem anderen Merkmal der Erfindung erfolgt die Abkühlung des Weißzementklinkers im vorderen Bereich der Misch- und Transportstrecke durch Besprühen mit einem Kühlmittel und in derem hinteren Bereich durch Ausdampfen. Auch in diesem Falle ist der Weißzementklinker bei seinem Eintritt in die letzte Kühlstufe weitgehend trocken.

Das erfindungsgemäße Verfahren kann noch dadurch verbessert werden, daß in der zweiten Kühlstufe eine Messung der Temperatur des Weißzementklinkers durchgeführt und solange ein kontrolliertes Besprühen des Weißzementklinkers mit einem Kühlmittel erfolgt, bis die gewünschte Austrittstemperatur der zweiten Kühlstufe erreicht ist.

Zweckmäßigerweise erfolgt in der ersten und in der zweiten Kühlstufe ein Brüdenabzug, wobei die Einrichtungen für den Brüdenabzug so geregelt werden, daß an der Schnittstelle zwischen dem Drehrohrofen und der ersten Kühlstufe einerseits sowie an der Schnittstelle zwischen der zweiten Kühlstufe und der dritten - der letzten - Kühlstufe andererseits der Gasaustausch möglichst gering ist.

Eine weitere Verbesserung des erfindungsgemäßen Verfahrens wird dadurch erzielt, daß vor dem Eintritt des Weißzementklinkers in die zweite Kühlstufe ein Abzug von zu schwach gebrannten Klinkerteilchen erfolgt.

Um einen Teil der von dem Weißzementklinker bei der Sinterung aufgenommenen Wärmeenergie zu rekuperieren wird nach einem weiteren Merkmal der Erfindung die in der letzten Kühlstufe noch in dem Weißzementklinker vorhandene Restwärme dem Drehrohrofen in Form vorgewärmter Verbrennungsluft zugeführt.

Die Anlage zur Durchführung des erfindungsgemäßen Verfahrens weist einen Drehrohrofen, ein mit einer Zerkleinerungsvorrichtung versehenes erstes Kühlaggregat und ein letztes Kühlaggregat auf. Bei dieser Anlage ist nach einem Merkmal der Erfindung zwischen dem ersten Kühlaggregat und dem letzten Kühlaggregat eine Misch- und Transportstrecke vorgesehen.

In Ausgestaltung der erfindungsgemäßen Anlage ist das erste Kühlaggregat mit einem Temperaturmeßgerät ausgestattet, das mit den in dem ersten Kühlaggregat vorgesehenen Düsen in Verbindung steht.

Die Misch- und Transportstrecke kann als Trommel, als Förderschnecke, als Mischer, beispielsweise als Pflugscharmischer o. dgl. ausgebildet sein. Zweckmäßigerweise ist die Misch- und Transportstrecke als Mischschnecke ausgebildet.

Die die Misch- und Transportstrecke bildende Trommel, Förderschnecke o. dgl. kann ganz oder teilweise mit einem Doppelmantel versehen sein, durch den das Kühlmittel geleitet werden kann.

Im Bereich der Misch- und Transportstrecke erfolgt eine Abkühlung des Weißzementklinkers durch Ausdampfen. Es kann aber auch die Misch- und Transportstrecke mit Düsen für die Zuführung eines Kühlmittels versehen, wobei nach einem weiteren Merkmal der Erfindung nur im vorderen Bereich der Misch- und Transportstrecke Düsen vorgesehen sind. Im letzteren Falle erfolgt nur im hinteren Bereich der Misch- und Transportstrecke eine weitere Abkühlung des Weißzementklinkers durch Ausdampfen.

Eine optimale Regelung des Zutritts von Kühlmittel durch die in der Misch- und Transportstrecke vorgesehenen Düsen wird dadurch erzielt, daß die Misch- und Transportstrecke mit einem Temperaturmeßgerät ausgestattet ist, das mit den Düsen in Verbindung steht.

Eine besonders zweckmäßige Ausführungsform der erfindungsgemäßen Anlage besteht darin, daß im oberen Bereich des ersten Kühlaggregats und im hinteren Bereich der Misch- und Transportstrecke mindestens je ein Brüdenabzug vorgesehen ist. Dadurch wird der Gasaustausch zwischen dem ersten Kühlaggregat und der Misch- und Transportstrecke sowie zwischen der Misch- und Transportstrecke und dem letzten Kühlaggregat erheblich verringert. Die Einstellung des Volumens der abzuziehenden Brüden erfolgt unter Beachtung der Gaszusammensetzung nach Erfahrung per Hand oder in Abhängigkeit vom Druck.

Die erfindungsgemäße Anlage kann noch dadurch verbessert werden, daß im unteren Bereich des ersten Kühlaggregats eine Abzugsvorrichtung für den Abzug zu schwach gebranntem Klinker vorgesehen ist, wobei zweckmäßigerweise die Abzugsvorrichtung einen Rost aufweist, der aus mehreren drehbaren, im Querschnitt rechteckförmigen Roststäben gebildet ist, deren Querschnittsflächen im normalen Betriebszustand senkrecht stehen, während sie zur Abführung von zu schwach gebranntem Klinker eine geneigte Lage einnehmen. Dieser Rost ist mit einem Absperrschieber gekoppelt, der sich erst öffnet, wenn der Rost wieder geschlossen ist. Der Absperrschieber verhindert, daß zu viel Luft in den ersten bzw. zweiten Kühlbereich gelangt.

Um zu verhindern, daß aus dem letzten Kühlaggregat Luft in die Misch- und Transportstrecke einströmen kann, ist zwischen der Misch- und Transportstrecke und dem letzten Kühlaggregat eine Klappenschleuse vorgesehen.

Die letzte Kühlstufe kann durch einen Rostkühler, Trommelkühler o. dgl. gebildet sein. Bei einer bevorzugten Ausführungsform der erfindungsgemäßen Anlage ist die letzte Kühlstufe durch einen Rostkühler gebildet. Hierbei erfolgt die Kühlung im Querstromverfahren.

Um die restliche Klinkerwärme, die der Weißzementklinker bei seinem Eintritt in die letzte Kühlstufe noch enthält, zur Vorwärmung der Verbrennungsluft nutzen zu können, ist nach einem weiteren Merkmal der Erfindung das letzte Kühlaggregat durch eine Rohrleitung mit Staubabscheider mit dem Drehrohrofen verbunden.

Im folgenden wird die Erfindung anhand der Zeichnung näher erläutert. Es zeigen:
- Fig. 1: eine Anlage zu Durchführung des erfindungsgemäßen Verfahrens in schematischer Darstellung in einer Seitenansicht und
- Fig. 2: einen Querschnitt durch eine Einzelheit der Anlage, in größerem Maßstab.

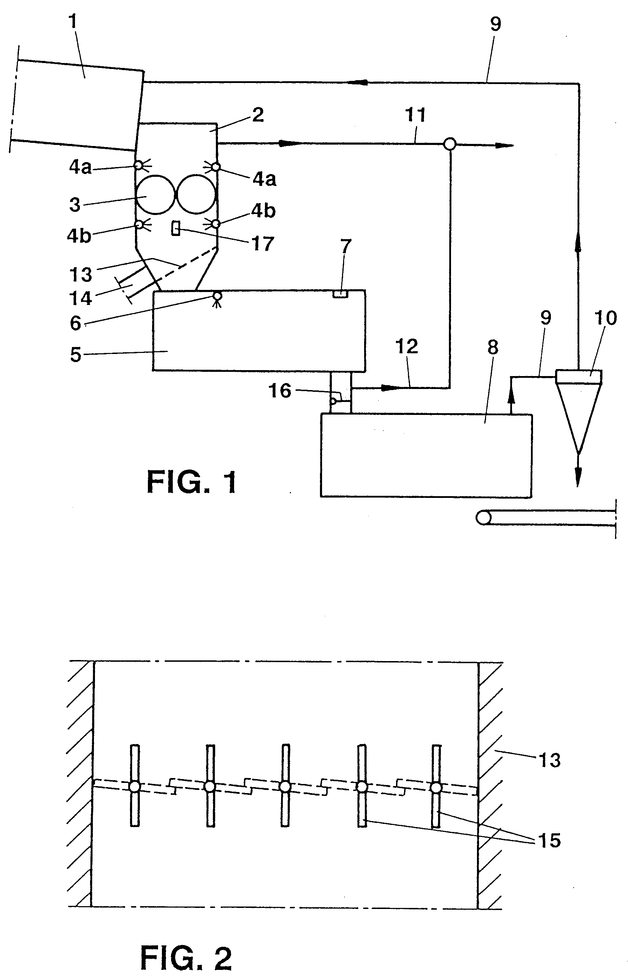

Bei der in Fig. 1 dargestellten Anlage schließt sich an den Drehrohrofen 1, in dem der Weißzementklinker gesintert wird, ein erstes Kühlaggregat 2 an. In diesem ersten Kühlaggregat 2 sind oberhalb einer Zerkleinerungsvorrichtung 3 mehrere Düsen 4a und unterhalb der Zerkleinerungsvorrichtung 3 mehrere Düsen 4b für die Zuführung eines Kühlmittels vorgesehen. In dem ersten Kühlaggregat 2 ist ein Temperaturmeßgerät 17 angeordnet, das mit den Düsen 4a in Verbindung steht. Das erste Kühlaggregat 2 mündet in eine Misch- und Transportstrecke 5, in derem vorderen Bereich weitere Düsen 6 für die Zuführung eines Kühlmittels vorgesehen sind. Außerdem ist die Misch- und Transportstrecke 5 mit einem Temperaturmeßgerät 7 versehen, das mit den Düsen 6 und/oder mit den Düsen 4b in Verbindung steht. An die Misch- und Transportstrecke 5 schließt sich ein letztes Kühlaggregat 8 an. In dem letzten Kühlaggregat 8 erfolgt die Kühlung im Quer- oder im Gegenstromverfahren mittels Luft, wobei die rekuperierte Klinkerwärme über eine Rohrleitung 9 dem Drehrohrofen 1 zugeführt wird. Für die Abtrennung von in die Rohrleitung 9 gelangten Klinkerteilchen dienen ein oder mehrere Staubabscheider 10. Die Regelung der Menge und des Drucks der vorgewärmten Verbrennungluft (Sekundärluft) erfolgt mit Hilfe eines frequenzgeregelten Ventilators.

Im oberen Bereich des ersten Kühlaggregats 2 ist ein Brüdenabzug 11 vorgesehen. Ein weiterer Brüdenabzug 12 befindet sich im hinteren Bereich der Misch- und Transportstrecke 5.

Der unteren Bereich des ersten Kühlaggregats 2 weist eine Abzugsvorrichtung 13 für den Abzug von ggf. anfallendem zu schwach gebranntem Klinker auf, wobei der Abzug des zu schwach gebrannten Klinkers über einen Rohrstutzen 14 erfolgt.

Zwischen der Misch- und Transportstrecke 5 und dem letzten Kühlaggregat 8 ist eine Klappenschleuse 16 angeordnet.

Wie aus Fig. 2 zu ersehen ist, ist die Abzugsvorrichtung 13 mit einem aus drehbaren Roststäben 15 gebildeten Rost versehen. Die Fig. 2 zeigt den Rost durch den Rohrstutzen 14 hindurch gesehen. Die Roststäbe 15 weisen einen rechteckigen Querschnitt auf. Im normalen Betriebszustand sind die Querschnittsflächen der Roststäbe 15 senkrecht angeordnet. Für den Abzug von ggf. anfallendem zu schwach gebranntem Klinker werden die Roststäbe 15 so gedreht, daß ihre Querschnittsflächen - wie mit gestrichelten Linien angedeutet - eine geneigte Lage einnehmen.

## Patentansprüche

1. Verfahren zur Kühlung von in einem Drehrohrofen (1) gesintertem Weißzementklinker, bei dem in einer ersten Kühlstufe eine Abschreckung des aus dem Drehrohrofen (1) austretenden Weißzementklinkers mittels eines Kühlmittels, beispielsweise Wasser, in einer möglichst sauerstoffarmen Umgebung erfolgt, wobei im Bereich der ersten Kühlstufe eine Zerkleinerungsvorrichtung (3) vorgesehen ist, und bei dem in einer letzten Kühlstufe der Weißzementklinker mittels Luft weiter abgekühlt und diese Luft als Verbrennungsluft in den Drehrohrofen (1) zurückgeführt wird,
**dadurch gekennzeichnet,**
- daß die Kühlung in der ersten Kühlstufe in möglichst sauerstoffarmer Umgebung bei kurzer Verweilzeit durchgeführt und der Weißzementklinker dabei auf eine mittlere Temperatur von etwa 650°C bis 750°C abgeschreckt wird,
- daß der Weißzementklinker sodann in eine zweite Kühlstufe gelangt, in der er - ebenfalls in möglichst sauerstoffarmer Umgebung - durch eine Misch- und Transportstrecke (5) geleitet wird und dabei bei einer Verweilzeit von mindestens 15 Sekunden die einzelnen Klinkerteilchen homogen vermischt werden, wobei ein Temperaturausgleich zwischen den einzelnen Klinkerteilchen und eine weitere Abkühlung des Weißzementklinkers auf eine Temperatur von etwa 550°C bis 650°C erfolgt,
- und daß danach der Weißzementklinker der letzten Kühlstufe zugeführt wird.

2. Verfahren nach Anspruch 1, dadurch gekennzeichnet, daß der gesamte Klinkerstrom nach dem Austritt aus dem Drehrohrofen (1) durch die Zerkleinerungsvorrichtung (3) geleitet wird.

3. Verfahren nach Anspruch 1 oder 2, dadurch gekennzeichnet, daß in der ersten Kühlstufe eine Messung der Temperatur des Weißzementklinkers durchgeführt wird und solange ein kontrolliertes Besprühen des Weißzementklinkers mit einem Kühlmittel erfolgt, bis die gewünschte Austrittstemperatur der ersten Kühlstufe erreicht ist.

4. Verfahren nach Anspruch 1, 2 oder 3, dadurch gekennzeichnet, daß die Verweilzeit des Weißzementklinkers in der Misch- und Transportstrecke (5) etwa 30 bis 120 Sekunden beträgt.

5. Verfahren nach einem der Ansprüche 1 bis 4, dadurch gekennzeichnet, daß die Abkühlung des Weißzementklinkers im Bereich der Misch- und Transportstrecke (5) durch Ausdampfen erfolgt.

6. Verfahren nach einem der Ansprüche 1 bis 4, dadurch gekennzeichnet, daß die Abkühlung des Weißzementklinkers im vorderen Bereich der Misch- und Transportstrecke (5) durch Besprühen mit einem Kühlmittel und in derem hinteren Bereich durch Ausdampfen erfolgt.

7. Verfahren nach einem der Ansprüche 1 bis 6, dadurch gekennzeichnet, daß in der zweiten Kühlstufe eine Messung der Temperatur des Weißzementklinkers durchgeführt wird und solange ein kontrolliertes Besprühen des Weißzementklinkers mit einem Kühlmittel erfolgt, bis die gewünschte Austrittstemperatur der zweiten Kühlstufe erreicht ist.

8. Verfahren nach einem der Ansprüche 1 bis 7, dadurch gekennzeichnet, daß in der ersten und in der zweiten Kühlstufe ein Brüdenabzug erfolgt.

9. Verfahren nach Anspruch 8, dadurch gekennzeichnet, daß die Einrichtungen für den Brüdenabzug so geregelt werden, daß an der Schnittstelle zwischen dem Drehrohrofen (1) und der ersten Kühlstufe einerseits sowie an der Schnittstelle zwischen der zweiten Kühlstufe und der dritten - der letzten - Kühlstufe andererseits der Gasaustausch möglichst gering ist.

10. Verfahren nach einem der Ansprüche 1 bis 9, dadurch gekennzeichnet, daß vor dem Eintritt des Weißzementklinkers in die zweite Kühlstufe ein Abzug von zu schwach gebrannten Klinkerteilchen erfolgt.

11. Verfahren nach einem der vorhergehenden Ansprüche, dadurch gekennzeichnet, daß die in der letzten Kühlstufe noch in dem Weißzementklinker vorhandene Restwärme dem Drehrohrofen in Form vorgewärmter Verbrennungsluft zugeführt wird.

12. Anlage zur Durchführung des Verfahrens nach einem der Ansprüche 1 bis 11, die einen Drehrohrofen (1), ein mit einer Zerkleinerungsvorrichtung (3) versehenes erstes Kühlaggregat (2) und ein letztes Kühlaggregat (8) aufweist, **dadurch gekennzeichnet**, daß zwischen dem ersten Kühlaggregat (2) und dem letzten Kühlaggregat (8) eine Misch- und Transportstrecke (5) vorgesehen ist, die derart ausgebildet ist, daß im Gebrauch die aus dem ersten Kühlaggregat (2) austretenden abgeschrechten Zementklinkerteilchen homogen vermischt und unter Temperaturausgleich danach weiter transportiert werden zum letzten Kühlaggregat (8).

13. Anlage nach Anspruch 12, dadurch gekennzeichnet, daß das erste Kühlaggregat (2) mit einem Temperaturmeßgerät (17) ausgestattet ist, das mit in dem ersten Kühlaggregat (2) vorgesehenen Düsen (4a) in Verbindung steht.

14. Anlage nach Anspruch 12 oder 13, dadurch gekennzeichnet, daß die Misch- und Transportstrecke (5) als Mischschnecke ausgebildet ist.

15. Anlage nach Anspruch 12, 13 oder 14, dadurch gekennzeichnet, daß die Misch- und Transportstrecke (5) mit Düsen (6) für die Zuführung eines Kühlmittels versehen ist.

16. Anlage nach Anspruch 15, dadurch gekennzeichnet, daß nur im vorderen Bereich der Misch- und Transportstrecke (5) Düsen (6) vorgesehen sind.

17. Anlage nach Anspruch 15 oder 16, dadurch gekennzeichnet, daß die Misch- und Transportstrecke (5) mit einem Temperaturmeßgerät (7) ausgestattet ist, das mit den in der Misch- und Transportstrecke (5) vorgesehenen Düsen (6) und/oder mit den in dem ersten Kühlaggregat (2) vorgesehenen weiteren Düsen (4b) in Verbindung steht.

18. Anlage nach einem der Ansprüche 12 bis 17, dadurch gekennzeichnet, daß im oberen Bereich des ersten Kühlaggregats (2) und im hinteren Bereich der Misch- und Transportstrecke (5) mindestens je ein Brüdenabzug (11, 12) vorgesehen ist.

19. Anlage nach einem der Ansprüche 12 bis 18, dadurch gekennzeichnet, daß im unteren Bereich des ersten Kühlaggregats (2) eine Abzugsvorrichtung (13) für den Abzug von zu schwach gebranntem Klinker vorgesehen ist.

20. Anlage nach Anspruch 19, dadurch gekennzeichnet, daß die Abzugsvorrichtung (13) einen Rost aufweist, der aus mehreren drehbaren, im Querschnitt rechteckförmigen Roststäben (15) gebildet ist, deren Querschnittsflächen im normalen Betriebszustand senkrecht stehen, während sie zur Abführung von zu schwach gebranntem Klinker eine geneigte Lage einnehmen.

21. Anlage nach einem der Ansprüche 12 bis 20, dadurch gekennzeichnet, daß zwischen der Misch- und Transportstrecke (5) und dem letzten Kühlaggregat (8) eine Klappenschleuse (16) vorgesehen ist.

22. Anlage nach einem der Ansprüche 12 bis 21, dadurch gekennzeichnet, daß die letzte Kühlstufe durch einen Drehrohrkühler gebildet ist.

23. Anlage nach einem der Ansprüche 12 bis 22, dadurch gekennzeichnet, daß das letzte Kühlaggregat (8) durch eine Rohrleitung (9) mit Staubabscheider (10) mit dem Drehrohrofen (1) verbunden ist.

## Claims

1. Process for cooling white cement clinker sintered in a rotary tubular kiln (1), wherein in a first cooling stage, quenching of the white cement clinker discharging from the rotary tubular kiln (1) is carried out by means of a coolant, e.g. water, in an environment as low as possible in oxygen, a crushing device (3) being provided in the region of the first cooling stage, and wherein in a last cooling stage, the white cement clinker is further cooled by means of air, and this air is returned as combustion air to the rotary tubular kiln (1),
characterised in that
- the cooling is carried out in the first cooling stage in an environment as low as possible in oxygen with a short sojourn time, and the white cement clinker is thereby quenched to an average temperature of about 650°C to 750°C;
- that the white cement clinker then passes into a second cooling stage in which - also in an environment as low as possible in oxygen - it is directed through a mixing and transport section (5), and with a sojourn time of at least 15 seconds, the individual clinker particles are thereby homogeneously mixed, whereby a temperature equalisation between the individual clinker particles and a further cooling of the white cement clinker is performed to a temperature of about 550°C to 650°C;
- and that the white cement clinker is subsequently fed to the last cooling stage.

2. Process according to Claim 1, characterised in that the entire clinker flow is directed through the crushing device (3) after discharge from the rotary tubular kiln (1).

3. Process according to Claim 1 or 2, characterised in that a measurement of the temperature of the white cement clinker is carried out in the first cooling stage and controlled spraying of the white cement clinker with a coolant occurs until the desired exit temperature from the first cooling stage is achieved.

4. Process according to Claim 1, 2 or 3, characterised in that the sojourn time of the white cement clinker in the mixing and transport section (5) amounts to about 30 to 120 seconds.

5. Process according to one of Claims 1 to 4, characterised in that the cooling of the white cement clinker is carried out by evaporation in the region of the mixing and transport section (5).

6. Process according to one of Claims 1 to 4, characterised in that the cooling of the white cement clinker is carried out by spraying with a coolant in the front region of the mixing and transport section (5) and by evaporation in its rear region.

7. Process according to one of Claims 1 to 6, characterised in that a measurement of the temperature of the white cement clinker is carried out in the second cooling stage and controlled spraying of the white cement clinker with a coolant until the desired exit temperature from the second cooling stage is achieved.

8. Process according to one of Claims 1 to 7, characterised in that removal of exhaust vapours occurs in the first and in the second cooling stage.

9. Process according to Claim 8, characterised in that the systems for the removal of exhaust vapours are regulated so that the gas exchange is as low as possible at the interface between the rotary tubular kiln (1) and the first cooling stage, on the one hand, and at the interface between the second cooling stage and the third - the last - cooling stage, on the other hand.

10. Process according to one of Claims 1 to 9, characterised in that the clinker particles which have been inadequately burned are removed prior to entry of the white cement clinker into the second cooling stage.

11. Process according to one of the preceding claims, characterised in that the residual heat still present in the white cement clinker in the last cooling stage is fed to the rotary tubular kiln in the form of preheated combustion air.

12. Apparatus for carrying out the process according to one of Claims 1 to 11, which has a rotary tubular kiln (1), a first cooling aggregate (2) equipped with a crushing device (3) and a last cooling aggregate (8), characterised in that a mixing and transport section (5) is provided between the first cooling aggregate (2) and the last cooling aggregate (8), which is constructed in such a way that during use, the quenched cement clinker particles discharging from the first cooling aggregate (2) are homogeneously mixed and upon temperature equalisation are then further transported to the last cooling aggregate (8).

13. Apparatus according to Claim 12, characterised in that the first cooling aggregate (2) is equipped with a temperature measuring device (17) which connects with the nozzles (4a) provided in the first cooling aggregate (2).

14. Apparatus according to Claim 12 or 13, characterised in that the mixing and transport section (5) is constructed in the form of a mixing screw.

15. Apparatus according to Claim 12, 13 or 14, characterised in that the mixing and transport section (5) is provided with nozzles (6) for the supply of a coolant.

16. Apparatus according to Claim 15, characterised in that nozzles (6) are provided only in the front region of the mixing and transport section (5).

17. Apparatus according to Claim 15 or 16, characterised in that the mixing and transport section (5) is equipped with a temperature measuring device (7) which connects with the nozzles (6) provided in the mixing and transport section (5) and/or with further nozzles (4b) provided in the first cooling aggregate (2).

18. Apparatus according to one of Claims 12 to 17, characterised in that in the upper region of the first cooling aggregate (2) and in the rear region of the mixing and transport section (5) at least one removal means (11, 12) is respectively provided for exhaust vapours.

19. Apparatus according to one of Claims 12 to 18, characterised in that a removal device (13) is provided in the lower region of the first cooling aggregate (2) for removal of clinker which has been inadequately burned.

20. Apparatus according to Claim 19, characterised in that the removal device (13) has a grate formed by several rotatable grate rods (15) with rectangular cross-section, the cross-sectional faces of which stand perpendicular in normal operating state, whereas they assume an inclined position for the removal of clinker which has been inadequately burned.

21. Apparatus according to one of Claims 12 to 20, characterised in that a valve sluice (16) is provided between the mixing and transport section (5) and the last cooling aggregate (8).

22. Apparatus according to one of Claims 12 to 21, characterised in that the last cooling stage is formed by a rotary tubular cooler.

23. Apparatus according to one of Claims 12 to 22, characterised in that the last cooling aggregate (8) is connected to the rotary tubular kiln (1) by a conduit (9) with a dust separator (10).

## Revendications

1. Procédé de refroidissement d'un clinker de ciment blanc, fritté dans un four à tube rotatif (1), dans lequel dans un premier étage de refroidissement est effectué un refroidissement brusque du clinker de ciment blanc sortant du four à tube tournant (1), ceci au moyen d'un agent de refroidissement, par exemple de l'eau, dans un environnement aussi pauvre que possible en oxygène, dans la zone du premier étage de refroidissement étant prévu un dispositif de broyage (3), et dans lequel, dans un dernier étage de refroidissement le clinker de ciment blanc est refroidi encore, au moyen d'air, et cet air étant recyclé comme air de combustion dans le four à tube rotatif (1), caractérisé en ce que,
- le refroidissement, pratiqué dans le premier étage de refroidissement dans un environnement aussi pauvre que possible en oxygène, est effectué avec un temps de séjour court et le clinker de ciment blanc est alors refroidi brusquement à une température moyenne d'environ 650°C à 750°C,
- en ce que le clinker de ciment blanc arrive ensuite dans un deuxième étage de refroidissement, dans lequel il est dirigé - également dans un environnement aussi pauvre que possible en oxygène - à travers un chemin de mélange et de transport (5) et alors, pendant un temps de séjour d'au moins 15 secondes, les différentes particules de clinker sont mélangées de façon homogène, un équilibrage de température entre les différents particules de clinker et un refroidissement supplémentaire du clinker de ciment blanc étant effectués à une température d'environ 550 à 650°C,
- en ce que, ensuite, le clinker de ciment blanc est amené au dernier étage de refroidissement.

2. Procédé selon la revendication 1, caractérisé en ce que l'ensemble du flux de clinker, après sortie du four à tube rotatif (1), est dirigé dans le dispositif de broyage (3).

3. Procédé selon la revendication 1 ou 2, caractérisé en ce que dans le premier étage de refroidissement est effectuée une mesure de la température du clinker de ciment blanc et une aspersion contrôlée du clinker de ciment blanc, par un agent de refroidissement, étant effectuée jusqu'à ce que la température de sortie souhaitée du premier étage de refroidissement soit atteinte.

4. Procédé selon la revendication 1, 2 ou 3, caractérisé en ce que le temps de séjour du clinker de ciment blanc dans le chemin de mélange et de transport (5) est d'environ 30 à 120 secondes.

5. Procédé selon l'une des revendications 1 à 4, caractérisé en ce que le refroidissement du clinker de ciment blanc s'effectue par évaporation, dans la zone du chemin de mélange et de transport (5).

6. Procédé selon l'une des revendications 1 à 4, caractérisé en ce que le refroidissement du clinker de ciment blanc, dans la zone avant du chemin de mélange et de transport (5), est effectué par aspersion par un agent refroidissant et, dans sa zone arrière, par évaporation.

7. Procédé selon l'une des revendications 1 à 6, caractérisé en ce que dans le deuxième étage de refroidissement est effectuée une mesure de la température du clinker de ciment blanc et une aspersion contrôlée du clinker de ciment blanc, par un agent de refroidissement, étant effectué jusqu'à ce que la température de sortie souhaitée du deuxième étage de refroidissement soit atteinte.

8. Procédé selon l'une des revendications 1 à 7, caractérisé en ce qu'une extraction des buées est effectuée dans le premier et dans le deuxième étage de refroidissement.

9. Procédé selon la revendication 8, caractérisé en ce que les dispositifs d'extraction des buées sont régulés de manière qu'à la première interface entre le four à tube rotatif (1) et le premier étage de refroidissement, d'une part, ainsi qu'à l'interface entre le deuxième étage de refroidissement et le troisième- le dernier - étage de refroidissement, d'autre part, l'échange de gaz soit aussi faible que possible.

10. Procédé selon l'une des revendications 1 à 9, caractérisé en ce qu'avant l'entrée du clinker de ciment blanc dans le deuxième étage de refroidissement est effectuée une extraction des particules de clinker ayant trop faiblement cuit.

11. Procédé selon l'une des revendication précédentes, caractérisé en ce que la chaleur résiduelle existant dans le dernier étage de refroidissement encore dans le clinker de ciment blanc est amenée au four à tube rotatif, sous la forme d'un air de combustion réchauffé.

12. Installation de mise en oeuvre du procédé selon l'une des revendications 1 à 11, présentant un four à tube rotatif (1), un premier groupe de refroidissement (2) pourvu d'un dispositif de broyage (3) et un dernier groupe de refroidissement (8), caractérisée en ce qu'entre le premier groupe de refroidissement (2) et le dernier groupe de refroidissement (8) est prévu un chemin de mélange et de transport (5) qui est réalisé de manière que, en utilisation, les particules de clinker de ciment, qui sont refroidies brusquement et sortent du premier groupe de refroidissement (2), sont mélangées de façon homogène et sont ensuite retransportées, avec équilibrage de température, vers le dernier groupe de refroidissement (8).

13. Installation selon la revendication 12, caractérisée en ce que le premier groupe de refroidissement (2) est équipé d'une appareil de mesure de température (17) qui est relié aux buses (4a) prévues dans le premier groupe de refroidissement (2).

14. Installation selon la revendication 12 ou 13, caractérisée en ce que le chemin de mélange et de transport (5) est réalisé sous forme de vis de mélange.

15. Installation selon la revendication 12, 13 ou 14, caractérisée en ce que le chemin de mélange et de transport (5) est pourvu de buses (6) destinées à l'amenée d'un agent de refroidissement.

16. Installation selon la revendication 15, caractérisée en ce que des buses (6) ne sont prévues que dans la zone avant du chemin de mélange et de transport (5).

17. Installation selon la revendication 15 ou 16, caractérisée en ce que le chemin de mélange et de transport (5) est équipé d'un appareil de mesure de température (7) qui est relié aux buses (6) prévues dans le chemin de mélange et de transport (5) et/ou aux buses (4b) supplémentaires prévues dans le premier groupe de refroidissement (2).

18. Installation selon l'une des revendications 12 à 17, caractérisée en ce que dans la zone supérieure du premier groupe de refroidissement (2) et dans la zone arrière du chemin de mélange et de transport (5) sont prévues respectivement au moins une extraction des buées (11, 12).

19. Installation selon l'une des revendications 12 à 18, caractérisée en ce que dans la zone inférieure du premier groupe de refroidissement (2) est prévu un dispositif d'extraction (13) pour assurer l'extraction du clinker ayant trop faiblement cuit.

20. Installation selon la revendication 19, caractérisée en ce que le dispositif d'extraction (13) présente une grille qui est constituée de plusieurs barres de grilles (15) à section transversale à forme rectangulaire, susceptibles de tourner, dont les surfaces de ces sections transversales sont, en état de fonctionnement normal, placées perpendiculairement tandis qu'elles prennent une position inclinée pour évacuer le clinker ayant trop faiblement cuit.

21. Installation selon l'une des revendications 12 à 20, caractérisée en ce qu'une écluse ou sas à clapet (16) est prévu(e) entre le chemin de mélange et de transport (5) et le dernier groupe de refroidissement (8).

22. Installation selon l'une des revendications 12 à 21, caractérisée en ce que le dernier étage de refroidissement est constitué par un refroidisseur à tube tournant.

23. Installation selon l'une des revendications 12 à 22, caractérisée en ce que le dernier groupe de refroidissement (8) est relié au four à tube rotatif (1) au moyen d'une conduite tubulaire (8) équipée d'un séparateur à poussières (10).
